# EUROPÄISCHE PATENTSCHRIFT

(11) **EP 1 114 547 B1**
(45) Veröffentlichungstag und Bekanntmachung des Hinweises auf die Patenterteilung: **06.03.2002**
(21) Anmeldenummer: 99955746.5
(22) Anmeldetag: 15.09.1999
(51) Int. Cl.: H04L 29/06, H04M 3/42, H04L 12/64, H04L 29/12, G06F 17/30

(54) **VERBINDUNGSEINHEIT UND VERFAHREN ZUR HERSTELLUNG EINER DATENVERBINDUNG**
CONNECTION UNIT AND A METHOD FOR ESTABLISHING A DATA CONNECTION
UNITE DE CONNEXION ET PROCEDE POUR ETABLIR UNE LIAISON DE DONNEES

(30) Priorität: 18.09.1998 EP 98117726
(43) Veröffentlichungstag der Anmeldung: 11.07.2001
(73) Patentinhaber: in medias res Gesellschaft für Kommunikationstechnologien mbH, 41236 Mönchengladbach (DE)
(72) Erfinder: STOFFELSMA, Bouke, C., 61325 Bad Homburg v.d.H. (DE)
(74) Vertreter: Patentanwälte Lippert, Stachow, Schmidt & Partner
(86) Internationale Anmeldenummer: DE9902997
(87) Internationale Veröffentlichungsnummer: WO0018079

(56) Entgegenhaltungen:
- EP-A- 0 732 835
- EP-A- 0 818 907
- WO-A-98/37665
- "Best Web Browser Netscape Navigator 3.0 and Internet Explorer 3.0 comparison" PC WORLD, AUG. 1996, PC WORLD COMMUNICATIONS, USA, Bd. 14, Nr. 8, Seiten 136, 138-139, 142, 146, 148, XP002100195 ISSN 0737-8939
- GREP R. NOTESS, REFERENCE LIBRARIAN, MONTANA STATE UNIVERSITY: "ON THE NET, WEB BROWSER KEYBOARD AND NAVIGATION SHORTCUTS" ONLINE, [Online] Mai 1998 (1998-05), Seiten 1-5, XP002100196 Web Retrieved from the Internet: <URL:HTTP://WWW.ONLINEINC.COM/ONLINEIMAG/O L1998/NET5.HTML> [retrieved on 1999-04-14]

## Beschreibung

Die Erfindung betrifft eine Verbindungseinheit zur Herstellung einer Datenverbindung zwischen zwei Datenverarbeitungsanlagen, die derart ausgebildet ist, dass sie abhängig von einer Anfrage einer ersten Datenverarbeitungsanlage die Verbindung mit einer zweiten Datenverarbeitungsanlage zur Übermittlung eines auf dieser abgelegten Datenelements aufbaut, wobei die zweite Datenverarbeitungsanlage und deren angefragtes Datenelement von der ersten Datenverarbeitungsanlage durch eine Adresse bezeichnet sind. Ebenso betrifft die Erfindung ein Verfahren zum Herstellen einer Datenverbindung zwischen zwei Datenverarbeitungsanlagen, das auf eine Anfrage einer ersten Datenverarbeitungsanlage hin zur Übermittlung eines auf der zweiten Datenverarbeitungsanlage abgelegten Datenelements einen Aufbau der Datenverbindung auslöst, wobei die zweite Datenverarbeitungsanlage und deren angefragtes Datenelement durch eine Adresse bezeichnet werden. Zu Datenverarbeitungsanlagen zählen sämtliche Vorrichtungen, mit welchen Datenverbindungen herstellbar sind, insbesondere zählen dazu Computer, Computerterminals und logisch adressierbare Massenspeicher. Die Datenelemente schließen Dateien, Programme und Programmelemente, Skripte, Datenströme und sonstige über Datenverbindungen austauschbare Elemente ein.

Mit dem Aufkommen preiswerter Rechnerleistung wurden für Datenverarbeitungsanlagen ganz neue Anwendungen und Einsatzmöglichkeiten geschaffen. Insbesondere im Bereich der Vernetzung findet eine rasante technologische Entwicklung statt. Inzwischen ist davon auszugehen, daß Datennetzwerke, wie beispielsweise das Internet, weltweit eine steigende Zahl von Benutzern anziehen und neben das Telefonnetz als ein allgemeines Kommunikationsmittel treten werden. Der große technische Erfolg des Internets liegt mit darin begründet, daß Daten als adressierte Pakete von Netzknoten zu Netzknoten gereicht werden. Hierdurch entfällt ein zentraler auf eine Topologie festgelegter Aufbau bzw. eine die durch das Netzwerk laufenden Datenelemente verteilende Instanz. Die Datenverbindungen im Netzwerk sind somit robust gegen Störungen und im Netz auftretende Fehler. Jedoch wirft das Herstellen von Datenverbindungen in einem solchen Datennetzwerk eine Reihe von technischen Problemen auf, insbesondere wenn besondere Anforderungen an die Datenverbindung gestellt werden. Die Probleme treten gerade in einem Paketnetzwerk, wie dem Internet auf, in dem sich ein Datenelement in Pakete zerschnitten seinen Weg durch das Netz sucht.

Um in einem Netzwerk besondere Anforderungen an die Datenverbindung stellen zu können, sind in der Vergangenheit eine Reihe von Lösungen vorgeschlagen worden. Besondere Anforderungen an eine Datenverbindung sind beispielsweise die Abschirmung der Datenübertragung gegenüber unbefugten Dritten, die Bandbreite der Datenverbindung und die Möglichkeit, Gebühren für die Datenverbindung zu erheben. Gelegentlich werden diese Merkmale auch als quality of service (QOS) zusammengefaßt und man spricht in diesem Zusammenhang dann von QOS-Datenverbindungen oder QOS-Netzwerken. Für die Bereitstellung von speziellen Diensten, z. B. die Übertragung von Ton- und Bilddaten oder die Möglichkeit gebührenpflichtig Datenbanken abzufragen, ist die Schaffung von QOS-Datenverbindungen als eine Möglichkeit bei der Bereitstellung besonderer Datenverbindungen wünschenswert.

Allgemein ist es so, daß in dem Datennetz ein Benutzer über seinen Computer bei einem zweiten Computer für ein ihn interessierendes Datenelement, wie beispielsweise eine Datei oder einen kontinuierlich zu übertragenden Datenstrom, anfragt.

Diese Anfrage gehorcht einem Protokoll, das einer Verbindungseinrichtung gestattet, die gewünschte Verbindung herzustellen oder deren Herstellung zu veranlassen. Weit verbreitete Protokolle im Internet sind beispielsweise das hyper text Transport protocol (http), das file transfer protocol (ftp) und das real audio Protokoll. Im Internet und im darauf aufgesetzten world wide web, als eine besonders benutzerfreundliche Ausgestaltung, beinhaltet die Anfrage nach einer Datenverbindung bei einer Datenverarbeitungsanlage für ein Datenelement eine eindeutige Adresse, den sogenannten Uniform Resource Locator (URL). Jedem direkt verfügbaren Datenelement ist eine eindeutige Adresse zugeordnet. Der Aufbau der URL-Adressen unterliegt dabei einer festen Syntax, nach der zu Beginn das Protokoll angegeben wird und anschließend ein Computer, der durch einen Namen in einer Domain bezeichnet ist. Dabei ist die Bezeichnung der Domain üblicherweise mit einem oder mehreren Domainnamen hierarchisch aufgebaut. An die Bezeichnungen des Rechners schließt sich in der URL-Adresse die genauere Kennzeichnung des angeforderten Datenelements an, beispielsweise in Form einer relativen Verzeichnisstruktur auf dem Computer mit einem Dateinamen. Wenn keine Datenelemente angeben werden, so wird in der Verzeichnisstruktur nach fest vereinbarten Default-Dateien gesucht. Mit Hilfe einer URL-Adresse ist jedes zur Verfügung stehende Datenelement zur Übertragung über eine Datenverbindung ansprechbar. An eine URL-Adresse können Parameter angehängt werden, die üblicherweise mit einem Fragezeichen für eine Anfrage - sogenanntes Query -, mit einem Doppelkreuz für eine Unteradresse oder ein Label oder mit einem Semikolon für sonstige Parameter beginnend eingeleitet werden. Die Parameter können beispielsweise dem Datenelement als eine Art von externem Programmparameter übergeben werden und beeinflussen so den Ablauf des Datenelements bei seiner Aktivierung.

Eine gattungsgemäße Verbindungseinheit ist aus der EP 0 732 835 bekannt.

Im Stand der Technik ist es ferner bekannt, dass der Benutzer mit einer an ihn gesandten Nachricht, beispielsweise in Form einer Textnachricht, über weitere zu veranlassende Schritte unterrichtet wird, wenn zu der angefragten Adresse ein Datenelement gehört, das eine besondere Datenverbindung erfordert. Beispielsweise wird er auf die Möglichkeit hingewiesen, bei dem Informationsanbieter ein Konto für die Gebühren einzurichten. Auch kommt es vor, daß der Benutzer zur Angabe seiner Kreditkartennummer über das Datennetz oder separat per Fax aufgefordert wird, damit der Informationsanbieter direkt mit ihm abrechnen kann. Eine Herstellung der angefragten Datenverbindung erfolgt, nachdem der Benutzer die gewünschten Schritte ausgeführt hat. Eine solche Herstellung einer Datenverbindung ist für den Benutzer unsicher, da er dem Anbieter der Information Daten für eine Abrechnung zur Verfügung stellen muß. Ferner ist es für den Informationsanbieter nachteilig, daß er keine Sicherheit für die Echtheit der Benutzerangaben hat.

Eine bereits etwas fortschrittlichere Methode ist aus der Patentschrift US 5,737,414 bekannt. Hier wird, um eine gebührenpflichtige Verbindung herzustellen, auf die Gebührenerfassung des Telefonnetzes zurückgegriffen. Beim Herstellen einer gebührenpflichtigen Datenverbindung wird der Benutzer aufgefordert, eine besondere Telefonnummer, bei der neben den üblichen Verbindungsgebühren zusätzliche Anbietergebühren anfallen, anzurufen. Mit diesem Telefonanruf werden dann Gebühren für die Datenverbindung abgerechnet. Hierzu ist es erforderlich, daß der das angefragte Datenelement bereitstellende Computer eine Zugangsnachricht über den getätigten Anruf bei der Telefonnummer mit der Gebührenerfassung erhält. Nach Eingang der Zugangsnachricht stellt er das angefragte Datenelement für die Datenverbindung bereit. Die Zugangsnachricht bildet in dem Datennetz somit direkt einen Gegenwert, da sie den angefragten Computer dazu veranlaßt, gebührenpflichtige Datenelemente bereitzustellen. Der Informationsanbieter rechnet über die mit dem Telefonanruf anfallenden Anbietergebühren seine Gebühren für das Bereitstellen der Datenelemente ab. Bei einer solchen Gebührenabrechnung ist es aus Sicherheitsgründen erforderlich, die Zugangsnachrichten und weitere Nachrichten, die ein Bereitstellen der Datenelemente auslösen, zu verschlüsseln. Nachteilig hierbei ist, daß zunächst bei dem Benutzer der Kanal für die Datenverbindung und der Kanal für die Gebührenerfassung, mithin also zwei Kanäle belegt sind. Ebenfalls als nachteilig wird eine auf kryptographischen Verfahren beruhende Sicherheit angesehen, da das Verschlüssen mit zunehmendem Verschlüsselungsgrad überproportional viel Zeit und Rechenleistung erfordert und bei den bekannten Verschlüsselungstechniken prinzipiell unsicher bleibt.

Diese Nachteile werden teilweise durch das in der Offenlegungsschrift EP 0 818 907 A2 beschriebene Verfahren, welches als Fusionnet bezeichnet wird, behoben. In dem dort vorgeschlagenen Netzwerk ist ein als Fusionnet-Server bezeichneter Server vorgesehen, der bei der Anfrage nach einer besonderen Datenverbindung eine Telefonverbindung von sich zu dem Benutzer herstellt. Zuerst stellt der Fusionnet-Server eine Datenverbindung zu dem nachgefragten Datenelement her. Anschließend stellt er eine Verbindung mit dem Benutzer her, um das Datenelement an diesen weiterzuleiten. Für diese Datenverbindung zum Benutzer verwendet der Fusionnet-Server wieder das Telefonnetz. Zur Herstellung der Verbindung wird vom Fusionnet-Server ein Anruf über eine Rufnummer mit Anbietergebühren durch den Computer des Benutzers entgegengenommen, oder der Fusionnet-Server stellt eine Verbindung zu dem Computer des Benutzers über ein R-Gespräch her. Dabei ist es aus Sicherheitsgründen nachteilig, daß ein Server im Datennetz vorgesehen ist, der über Daten von anfragenden Benutzern verfügt, um eine gebührenpflichtige Verbindung zu diesen herzustellen. Insbesondere ist der Sicherheitsaspekt problematisch, Datenverbindungen über Telefonverbindungen mit Anbietergebühren, die zu Lasten des Benutzers gebucht werden, durch den Server selber herzustellen. Weiterhin sind die technischen Anforderungen an den Fusionnet-Server sehr hoch, da dieser im ungünstigsten Fall eine Vielzahl von Datenverbindungen mit besonderen Anforderungen gleichzeitig verwalten und die Datenelemente bereitstellen muß.

Von diesem Stand der Technik ausgehend liegt der Erfindung die Aufgabe zugrunde, eine Verbindungseinheit und ein Verfahren zur Verbindungssteuerung bereitzustellen, welche für ein im Datennetz angefragtes Datenelement eine von dem Datenelement abhängige besondere Datenverbindung schnell, einfach und sicher aufbauen kann.

Erfindungsgemäß ist bei der eingangs genannten Verbindungseinheit ein Adressengenerator vorgesehen, der derart ausgebildet ist, dass er abhängig von der angefragten Adresse eine zweite Adresse generiert, einen Aufbau der Datenverbindung zu der durch die zweite Adresse bezeichneten Datenverarbeitungsanlage und deren Datenelement auslöst und Bestandteil der ersten Datenverarbeitungsanlage ist. Der Adressengenerator transformiert die angefragte Adresse in eine zweite Adresse. Da das Ergebnis der Transformation, die zweite Adresse, wieder eine zulässige Adresse ist, kann die erfindungsgemäße Verbindungseinheit, um den Verbindungsaufbau zu der zweiten Adresse auszulösen, weiterhin auf bekannte Übertragungs- und Adressierungstechniken zurückgreifen. Es kann sich mithin auch um ein herkömmliches Paketnetzwerk wie das Internet handeln, in dem die erfindungsgemäße Verbindungseinheit arbeitet. Die Verbindungseinheit löst den Aufbau der Datenverbindung in dem Netzwerk in herkömmlich bekannter Weise durch ein Weiterleiten der zweiten Adresse aus. Auch ist es an der Verwendung einer zweiten Adresse besonders vorteilhaft, dass die erfindungsgemäßen Verbindungseinheiten das bestehende Datennetz nicht stören. Denn bei einer durch die erfindungsgemäße Verbindungseinheit hergestellten Datenverbindung wird auf die herkömmlichen Adressen zuruckgegriffen und keine inkompatiblen Elemente in die Adresse eingeführt. Das Generieren der zweiten Adresse erfolgt abhängig von der angefragten Adresse. Hierbei bestehen mannigfaltige Möglichkeit, diese Abhängigkeiten auszugestalten. Da die angefragte Adresse von der anfragenden ersten Datenverarbeitungsanlage ausgeht, kann der Adressengenerator abhängig von der anfragenden Datenverarbeitungsanlage die zweite Adresse generieren. Da in der Regel der Benutzer die Adresse an der ersten Datenverarbeitungsanlage nicht neu eingibt, sondern die Adresse ihm zuvor von einer anderen Datenverarbeitungsanlage übermittelt wurde, beispielsweise in Form eines Verbindungshinweises, einem sogenannten Link, kann der Adressengenerator die zweite Adresse auch abhängig von der Ausgestaltung der übermittelten

Adresse bzw. abhängig von auf der anderen Datenverarbeitungsanlage abgelegten Informationen generieren. Mithin kann also die abhängig von der angefragten Adresse generierte zweite Adresse durch die anfragende Datenverarbeitungsanlage und durch den Informationsanbieter, der die angefragte Adresse ursprünglich bekannt gegeben hat, bestimmt werden oder durch beide gemeinsam. Im Falle des Internet und seinem world wide web heißt dies, dass eine angefragte URL abhängig von ihrem Inhalt in eine zweite URL transformiert wird und der Aufbau einer Datenverbindung zu dem durch die zweite URL-Adresse bezeichneten Datenelement ausgelöst wird. Die erfindungsgemäße Verbindungseinrichtung bietet die Möglichkeit, in einem bestehenden Netzwerk flexibel Datenverbindungen mit besonderen Anforderungen aufzubauen, da die Zieladresse für ein Datenelement variabel ist und entsprechend den besonderen Anforderungen generiert werden kann. Unter Generieren bzw. Transformieren soll nicht ein Dekodieren einer URL in eine IP-Adresse fallen, da bei dem Dekodieren lediglich das Darstellungsformat derselben Adresse gewechselt wird. Unter Verwendung der Bezeichnungen des auf einem Vorschlag der ISO (International Standards Organisation) basierenden OSI-Referenzmodells (Open System Interconnection-Referenzmodell) sollen hier Adressen innerhalb einer Schicht generiert werden und anders als beim Routing, das sich in einer tieferliegenden Schicht - wie beispielsweise der Netzwerkschicht (network layer) oder der Transportschicht (Transport layer) - abspielt, nicht kodiert und dekodiert werden. Insbesondere sollen die zu generierenden zweiten Adressen der obersten Schicht, also der Anwendungsschicht (application layer) im- OSI-Referenzmodell, entstammen und ihren Protokollen genügen, damit zur Herstellung der Datenverbindung auf die bewährten Schichten des Netzwerks und ihre Techniken zuruckgegriffen werden kann.

Zur einfacheren Umsetzung in dem Netz ist wenigstens der Adressengenerator Bestandteil der anfragenden ersten Datenverarbeitungsanlage. Der Adressengenerator kann hierbei als eine Schaltung auf einer Einsteckplatine für die erste Datenverarbeitungsanlage vorliegen. Alternativ kann er auch in Form eines Verfahrens sich bereits vorhandener Bauelemente der Datenverarbeitungsanlage bedienen. Wichtig hierbei ist, daß der Adressengenerator, wenn er Bestandteil der anfragenden Datenverarbeitungsanlage ist, keine weiteren Änderungen im Datennetz erfordert. Die beispielsweise beim world wide web von einem Bedienerprogramm, wie einem Internet-Browser, abgesandte URL-Adresse wird, bevor sie den Computer verläßt und an Verbindungseinheiten, wie einen POP-Einwahlpunkt (point of presence-Einwahlpunkt) eines Internet-Providers, weitergeleitet wird, durch den Adressengenerator auf dem anfragenden Rechner in eine zweite URL-Adresse transformiert. Mithin wird in die bestehende Art, eine Datenverbindung herzustellen, nicht eingegriffen. Die erfindungsgemäße Verbindungseinheit kann auf jeder bestehenden Datenverarbeitungsanlage zusätzlich vorgesehen werden, ohne daß im wesentlichen in deren vorhandenen Elemente zur Herstellung einer Datenverbindung eingegriffen werden muß.

Um besonderen Anforderungen an eine Datenverbindung entsprechen zu können, besteht zweckmäßigerweise mindestens ein Abschnitt der Datenverbindung aus einer Telefonverbindung in einem Telefonnetz. Zu den Telefonverbindungen gehören hier insbesondere Wählverbindungen im Telefonnetz. Eine Datenverbindung zwischen zwei verschiedenen Datenverarbeitungsanlagen kann sich vieler Kommunikationskanäle bedienen. Beispielsweise können speziell ausgelegte Datennetze, Telefonnetze und Funk- bzw. Satellitenverbindungen nebeneinander verwendet werden. Hierbei ist es nicht einmal erforderlich, daß ein Verbindungspfad gleichzeitig besteht, sondern es ist üblich zur Reduzierung des Kommunikationsaufwands, in dem Datennetz Zwischenspeicher, beispielsweise mit Cache-Funktionen oder als Proxy-Server, vorzusehen. Die Zwischenspeicher, die Datenelemente, wie häufig angefragte Dateien oder besonders große Datenelemente, in einer Kopie vorhalten, machen eine gleichzeitige Verbindung aller Rechner entlang des Pfades überflüssig. Indem die Verbindungseinheit zweckmäßigerweise stets mindestens in einem Teilstück einmal auf eine Telefonverbindung zurückgreift, liegen mindestens an einer Stelle der Datenverbindung der Verbindungseinheit bekannte und definierte Verbindengsparameter vor, die bei der Herstellung der besonderen Datenverbindung berücksichtigt werden können. Insbesondere bei einem Computer, der sich über das öffentliche Telefonnetz mit einem Modem oder über eine ISDN-Schnittstelle in das Internet einwählt, liegt in der Regel eine Telefonverbindung vor.

In einer besonders bevorzugten Ausführung der Erfindung löst der Adressengenerator den Aufbau der Datenverbindung für die zweite Adresse über eine vorbestimmte Telefonverbindung, die mindestens in einem Leistungsmerkmal von einer herkömmlichen Verbindung abweicht, aus. Hier greift der Adressengenerator in den Aufbau der Datenverbindung ein, indem er für die Datenverbindung zu der generierten zweiten Adresse eine vorbestimmte Telefonverbindung aufbaut. Die erfindungsgemäße Verbindungseinheit ermöglicht es, abhängig von der angefragten Adresse eine zweite Adresse zu generieren und die Verbindung zu der durch die zweite Adresse bezeichneten Datenverarbeitungsanlage teilweise über eine besondere Telefonverbindung aufzubauen. Die Telefonverbindung wird hierbei von dem Adressengenerator ausgelöst. Die den Aufbau einer besonderen Telefonverbindung direkt auslösenden Faktoren liegen alle in der anfragenden Datenverarbeitungsanlage. Diesbezügliche Sicherheitsprobleme entfallen, da der Verbindungsaufbau nur von der anfragenden Datenverarbeitungsanlage ausgelöst und kontrolliert wird. Ein weiterer Vorteil des durch den Adressengenerator ausgelösten Verbindungsaufbaus über eine vorbestimmte Telefonverbindung ist es, daß dieser Verbindungsaufbau wieder gemeinsam mit den bestehenden Komponenten und Techniken erfolgen kann. Der grundsätzliche Aufbau der Datenverbindung bleibt gleich, lediglich ein Abschnitt der Datenverbindung erfolgt über eine vorbestimmte Telefonverbindung. Insbesondere bleibt bei einer Datenverarbeitungsanlage, die über das öffentliche Telefonnetz mit einem POP-Einwahlpunkt eines Internet-Providers verbunden ist, die Wirkungsweise der mit der erfindungsgemäßen Verbindungseinheit versehenen Datenverarbeitangsanlage verborgen. Denn es wird lediglich die zweite Adresse über die vorbestimmte Telefonverbindung weitergereicht, so daß keine Änderungen für das Herstellen der Datenverbindung erforderlich ist. Bei der durch die zweite Adresse bezeichneten Datenverarbeitungsanlage kann die Information vorliegen, daß die Datenverbindung für das bezeichnete Datenelement teilweise über die vorbestimmte Telefonverbindung besteht. Besonders vorteilhaft ist es hierbei, wenn die vorbestimmte Telefonverbindung direkt zu der Datenverarbeitungsanlage erfolgt, die anfragende Datenverarbeitungsanlage also durch die Verbindungseinheit direkt mit der Datenverarbeitungsanlage, die das durch die zweite Adresse bezeichnete Datenelement enthält, verbunden wird.

Günstigerweise nutzt die so aufgebaute Datenverbindung die gesamte zur Verfügung stehende Bandbreite der vorbestimmten Telefonverbindung aus. Hierbei wird als Bandbreite der Telefonverbindung die effektiv zur Verfügung stehende Übertragungskapazität der Telefonverbindung einschließlich einer Schnittstelle zur Datenverarbeitungsanlage angesehen. Bei der durch die zweite Adresse bezeichneten Datenverarbeitungsanlage ist hierbei bekannt, daß das angefragte Datenelement über eine besondere Telefonverbindung abgefragt wird, mithin kann das Datenelement unter Ausnutzung dieser Information bereitgestellt und übertragen werden.

Ein weiteres vorteilhaftes Merkmal der erfindungsgemäßen Verbindungseinheit besteht darin, daß für den Aufbau der vorbestimmten Telefonverbindung der Adressengenerator eine bestehende Telefonverbindung trennt. Durch ein vorheriges Trennen einer bereits bestehenden Telefonverbindung ist auch bei einem Wechsel zu einer Telefonverbindung mit besonderen Leistungsmerkmalen nur eine Telefonleitung erforderlich. Besondere Leistungsmerkmale können sein, daß für die Telefonverbindung eine Anbietervergütung anfällt, besondere Verschlüsselungsund/oder Kompressionsverfahren auf der Telefonverbindung ablaufen oder die Telefonverbindung je nach Erfordernis des Datenelements eine unterschiedliche Bandbreite aufweist. Zu den besonderen Leistungsmerkmalen der Telefonverbindungen die ebenfalls mit der erfindungsgemäßen Verbindungseinheit angeboten werden können, zählen auch veränderliche Bandbreiten, wie sie beispielsweise eine ATM-Verbindung (asynchronous transfer mode-Verbindung) ermöglicht, eine garantierte Verfügbarkeit und Zuverlässigkeit der Verbindung, eine besonders kurze Antwort/Zugriffszeit (latency der Verbindung), eine Portabilität der Verbindung insofern, als aus speziellen Situationen heraus beispielsweise eine Verbindung über das Mobilfunknetz herstellbar ist. Auch sind neben anderen als besondere Leistungsmerkmale eine Rufumleitung, eine beispielsweise zeitabhängige Rufzielführung, sowie die Auswahl von Verbindungen mit speziellen Meßmöglichkeiten, das Senden von Teilnehmerdaten möglich ebenso wie auch Verbindungen, die als besonderes Merkmal eine Ursprungserkennung gestatten. Bei einer Telefonverbindung auf der Anbietergebühren anfallen kann die Bereitstellung von Datenelementen über das Datennetz abgerechnet werden, ohne daß irgendwelche Zahlungsinformationen oder sonstige digitalen Zahlungseinheiten durch das Netz weitergereicht werden. Der Anbieter von kostenpflichtigen Informationen im Datennetz kann diese auf die herkömmliche Art und Weise anbieten. Lediglich wenn die Verbindung zu dieser hergestellt werden soll, dann erfolgt der Verbindungsaufbau teilweise über eine Telefonverbindung auf der Anbietergebühren anfallen. Die Anbietergebühren fallen an, sobald die Verbindung zu dem Anbieter hergestellt ist und ihre Erfassung endet, wenn nicht mehr auf die angebotenen Datenelemente zugegriffen wird, da dann die Verbindung wieder getrennt wird. Im Gegensatz zu einer Verbindung im Internet kann eine solche Telefonverbindung, auch als eine point-to-point Verbindung bezeichnet, nur schwer durch unbefugte Dritte abgehört werden. Insbesondere bei der Direkteinwahl in die durch die zweite Adresse bezeichnete Datenverarbeitungsanlage erfolgt der Zugriff ohne Umgehungsmöglichkeiten der Abrechnung, und die Gebührenerfassung setzt ohne wesentliche Zeitverzögerung ein.

Es ist zweckmäßig, wenn der Adressengenerator den Aufbau der getrennten Verbindung wieder auslöst, wenn für die angefragte Adresse kein besonderes Leistungsmerkmal erforderlich ist. Hierdurch wird auf die Verbindung mit den besonderen Leistungsmerkmalen nur zurückgegriffen, wenn die Leistungsmerkmale erforderlich sind.

Zur Wahrung der Qualität der Datenverbindung bezeichnet die von dem Adressengenerator erzeugte zweite Adresse eine Datenverarbeitungsanlage in einem Unternetzwerk. Da die erfindungsgemäße Verbindungseinheit, wie oben erläutert, nicht in das bestehende Netzwerk eingreift und die zweite Adresse dem entsprechenden Protokoll genügt, kann die durch die zweite Adresse bezeichnete Datenverarbeitungsanlage auf herkömmliche Weise in das Datennetz eingebunden sein. Wenn jedoch Datenelemente ausschließlich über eine erfindungsgemäß aufgebaute Datenverbindung übertragen werden sollen, dann ist es erforderlich, daß die Datenverarbeitungsanlagen ein logisches Unternetzwerk, d.h. einen in nicht mehr als einem Knoten anknüpfenden Ast des Netzgraphens, bilden, wobei die anfragenden Datenverarbeitungsanlagen jeweils den Anknüpfungsknoten darstellen. Somit kann in das Unternetzwerk nur durch die erfindungsgemäße Verbindungseinheit geschaltet werden. Hierbei gibt es zwei Alternativen: In einer ersten Alternative sind die Datenelemente, die eine besondere Verbindung benötigen, doppelt in dem Netz vorhanden und der Benutzer kann auswählen, ob die Verbindung zu der durch den Adressengenerator erzeugten zweiten Adresse aufgebaut wird. In der zweiten Alternative steht das Datenelement nur in einer der Datenverarbeitungsanlagen des Unternetzes bereit und kann nur von dort über die Verbindungseinheit abgerufen werden.

Zur Erzeugung der zweiten Adresse kann der Adressengenerator eine Liste von Adressenzuordnungen enthalten, die jeder zweiten Adresse mindestens eine Adresse zuordnen, bei deren Anfrage die zweite Adresse generiert wird. Wird also beispielsweise die URL-Adresse http://www.EPA.eu/Dokumentl.html angefragt und ist in der Adressenliste des Adressengenerators die zweite URL-Adresse http://www.provider.de/www.EPA.eu/D1.html dieser URL-Adresse zugeordnet, so wird die zweite URL-Adresse generiert und der Verbindungsaufbau zu dieser veranlaßt. Der Vorteil einer solchen Liste besteht darin, daß es möglich ist, individuelle Zuordnungen durch den Adressengenerator vorzunehmen. So kann jeder Adressengenerator individuell zweite Adressen erzeugen. Eine Erneuerung der zweiten Adressen kann dann durch die Änderungen einzelner Zuordnungen oder durch den Austausch der gesamten Liste in dem Adressengenerator der Verbindungseinheit erfolgen.

Ebenfalls zweckmäßig für den Adressengenerator ist es, wenn die beim Adressengenerator eingehende Adresse Parameter enthält, die das Generieren der zweiten Adresse auslösen und die zweite Adresse bestimmen. Bei dieser Art der Abhängigkeit der zweiten Adresse von der ursprünglichen Adresse, enthält die eingehende erste Adresse Parameter mit einer Syntax, welche die Erzeugung der zweiten Adresse festlegt. Vorteilhaft an den Parametern ist, dass diese auf bereits im Netzwerk vorhandene Komponenten, welche die Datenverbindungen aufbauen, keinen Einfluss haben. Zudem gestatten sie es, dass der Informationsanbieter, indem er bei seiner Adresse der Syntax des Adressengenerators folgt, selbst die zweite Adresse bestimmt. Wird nicht die erfindungsgemäße Verbindungseinheit verwendet, so bleiben die Parameter unberücksichtigt und es wird eine herkömmliche Datenverbindung aufgebaut; wird dagegen eine erfindungsgemäße Verbindungseinheit verwendet, so kann diese die Datenverbindung zu der zweiten vom Informationsanbieter ausgewählten Adresse herstellen.

Die der Erfindung zugrundeliegende Aufgabe wird ebenfalls durch vorgenanntes Verfahren gelöst, bei dem abhängig von der angefragten Adresse eine zweite Adresse generiert wird und der Aufbau der Datenverbindung zu der durch die zweite Adresse bezeichneten Datenverarbeitungsanlage und deren Datenelement ausgelöst wird und die zweite Adresse von der anfragenden Datenverarbeitungsanlage generiert wird. Das erfindungsgemäße Verfahren läuft auf einer Verbindungseinheit, wie beispielsweise einem PROXY-Server, auf speziell dafür im Netz vorgesehenen Verbindungseinheiten oder dergleichen ab. Das Verfahren bewirkt den Aufbau einer Datenverbindung mit einer von der angefragten Datenverarbeitungsanlage verschieden bezeichneten Datenverarbeitungsanlage. Indem die zweite Adresse abhängig von der angefragten Adresse generiert wird, kann mit der zweiten Adresse eine besondere Datenverbindung, die für das spezielle nachgefragte Datenelement ausgelegt ist, aufgebaut werden.

Insbesondere ist es vorteilhaft, wenn die zweite Adresse von der anfragenden Datenverarbeitungsanlage generiert wird. Das Verfahren kann auf der Datenverarbeitungsanlage ablaufen und dort die für eine Datenverbindung angefragten Adressen entgegennehmen und abhängig von diesen in zweite Adressen transformieren.

Um die Qualität der Datenverbindung leichter beeinflussen zu können, erfolgt der Aufbau der Datenverbindung zu der durch die zweite Adresse bezeichneten Datenverarbeitungsanlage mindestens teilweise über eine vorbestimmte Telefonverbindung. In einem ersten Schritt wird also erkannt, ob zu der angefragten Adresse eine zweite Adresse zu generieren ist, in einem zweiten Schritt wird die zweite Adresse abhängig von der ersten Adresse generiert, hieran schließt sich in einem dritten Schritt an, für die Datenverbindung zu der durch die zweite Adresse bezeichneten Datenverarbeitungsanlage eine vorbestimmte Telefonverbindung aufzubauen. Dieses Verfahren ist gegen einen Mißbrauch gesichert, da die vorbestimmte Telefonverbindung unabhängig von einer eventuell vorgespiegelten Identität des Benutzers aufgebaut wird.

Besonders zweckmäßig sind die beiden zusätzlichen Verfahrensschritte, wonach bei einer angefragten Adresse, für die eine zweite Adresse generiert wird, eine bereits bestehende Telefonverbindung, die mit der vorbestimmten Telefonverbindung nicht übereinstimmt, abgebaut wird und anschließend die vorbestimmte Telefonverbindung durch Anwahl einer entsprechenden Telefonnummer von der anfragenden Datenverarbeitungsanlage aus aufgebaut wird. Diese beiden Verfahrensschritte stellen sicher, daß die Kommunikation nicht unnötig lange unterbrochen wird. Für den Benutzer wird die entsprechende Verbindung aufgebaut, ohne daß für ihn die gewählte Datenverbindung erkennbar ist. Bei dem Aufbau der vorbestimmten Telefonverbindung können für den Fall, daß eine Telefonnummer besetzt ist, mehrere Telefonnummern der Reihe nach verwendet werden, um die vorbestimmte Telefonverbindung schnell aufzubauen.

Beispielsweise zur Bezahlung der bereitgestellten Datenverbindung, ist es besonders günstig, wenn die vorbestimmte Telefonverbindung besondere Leistungsmerkmale aufweist. Insbesondere ist es günstig, wenn für die vorbestimmte Telefonverbindung zusätzlich zu den Verbindungsgebühren noch Anbietergebühren erhoben werden. Eine solche Verbindung gewährt beiden Parteien eine große Sicherheit. Bei der Abfrage von gebührenpflichtigen Informationen wählt der anfragende Computer die gebührenpflichtige Telefonnummer an. So können durch den Benutzer der anfragenden Datenverarbeitungsanlage zu jeder Zeit unabhängig die Kosten überblickt und kontrolliert werden. Der Anbieter hat bei diesem Verfahren die Sicherheit, daß die Gebühren für die abgefragten Datenelemente auch erfaßt werden und er seinen Anteil an den Anbietergebühren erhält. Als zusätzliche Sicherheit kann noch der Verfahrensschritt vorgesehen werden, daß durch den Benutzer der Aufbau der gebührenpflichtigen Telefonverbindung noch einmal ausdrücklich bestätigt werden muß.

In einer besonders einfach umzusetzenden Ausführung des erfindungsgemäßen Verfahrens wird durch Parameter der eingehenden Adresse mindestens ein Leistungsmerkmal für die Datenverbindung bestimmt und die vorbestimmte Telefonverbindung abhängig von den Parametern mit entsprechenden Leistungsmerkmalen ausgewählt. Bei der Gebührenerfassung wird durch Parameter der eingehenden Adresse die anfallende Anbietergebühr für die Datenverbindung bestimmt und die vorbestimmte Telefonverbindung abhängig von den Parametern mit entsprechender Anbietergebühr ausgewählt. Gemeinsam mit der eingehenden Adresse können mehrere Parameter übermittelt werden. Hierbei können auch Parameter zur Festlegung des Tarifs, der Bandbreite oder Schlüssel für eine Verschlüsselung übermittelt werden. Beispielsweise beschreibt die eingehende URL-Adresse:
http://www.abc.de/dokumentl.html? ....tarif=A...., daß für das Datenelement dokumentl.html der Tarif A gilt. In diesem Beispiel markiert das Fragezeichen das Ende der Adresse und den Beginn des Parameterteils und die Punkte stehen für weitere Angaben im Parameterteil. Mit dieser Tarifinformation kann der Informationsbieter seine Gebühr, für die er das Datenelement anbietet, selber festsetzen. Denn wählt eine Datenverarbeitungsanlage diese Adresse aus, so wird der Parameterteil mit übermittelt, ohne daß dies einen zusätzlichen Schritt erforderlich macht.

Auch kann es vorteilhaft sein, zu der vorbestimmten Telefonverbindung mit besonderen Leistungsmerkmalen abhängig von der eingehenden Adresse zu wechseln. Hierbei weist die Telefonverbindung besondere Leistungsmerkmale auf, beispielsweise eine Verbindung mit einer speziellen Bandbreite, und es wird abhängig von den geforderten Leistungsmerkmalen zu dieser gewechselt.

Bei einer vorteilhaften Ausgestaltung des Verfahrens ist die durch die zweite Adresse bezeichnete Datenverarbeitungsanlage von der durch die angefragte Adresse bezeichneten Datenverarbeitungsanlage verschieden. Indem bei dem Verfahrensschritt zum Aufbau der Datenverbindung zwischen zwei Datenverarbeitungsanlagen unterschieden wird, wird sichergestellt, daß auch bestehende Datennetze, in denen nicht alle Datenverarbeitungsanlagen das erfindungsgemäße Verfahren anwenden, reibungslos funktionieren können. Bei dem herkömmlichen Verbindungsverfahren werden die Parameter der Adresse überlesen und die Verbindung mit der eingehenden Adresse aufgebaut. In dem Beispiel also mit: http://www.abc.de/dokumentl.html. Wird das erfindungsgemäße Verfahren angewendet, so wird die zweite Adresse generiert und zu dieser, eventuell über eine besondere Telefonverbindung, verbunden. Will der Anbieter des Datenelements, hier dokumentl.html, dieses ausschließlich unter der zweiten Adresse anbieten, so kann er unter der angefragten Adresse als Datenelement einen Hinweis hinterlegen, der über das Verfahren informiert.

In einer zweckmäßigen Ausführung kann auf der anfragenden Datenverarbeitungsanlage eingestellt werden, ob für eine eingehende Adresse eine zweite Adresse generiert werden soll. Ein solcher Schritt bietet dem Benutzer die Möglichkeit, unter Ausschältung des erfindungsgemäßen Verfahrens, Datenverbindungen zu erzeugen. Hierzu wird die Generierung der zweiten Adressen unterdrückt und die eingehende Adresse weiterleitet.

In einer besonders vorteilhaften Ausbildung des erfindungsgemäßen Verfahren bezeichnen die eingehende Adresse und die zweite Adresse jeweils in einer dem verwendeten Protokoll entsprechenden Weise eine Datenverarbeitungsanlage. Wird das Verfahren nicht angewendet, so kann dennoch eine Datenverbindung mit der eingehenden Adresse hergestellt werden, da diese eine zulässige Adresse darstellt. Das Verfahren kann somit auch auf die bekannten Techniken zum Verbindungsaufbau und zur Adressierung zurückgreifen. Ferner werden keine Elemente in die Adressen eingefügt, die ein Vermittlung oder ein Weiterleiten der Adressen behindern könnten.

Ein Ausführungsbeispiel, bei der mit dem erfindungsgemäßen Verfahren als besondere Anforderung an die Datenverbindung eine Gebührenerfassung umgesetzt wird, zeigen die folgenden Figuren. Selbstverständlich können mit dem erfindungsgemäßen Verfahren neben einer Gebührenabrechnung auch andere besondere Leistungsmerkmale umgesetzt werden. In der Zeichnung zeigt:
- Fig. 1: ein Blockschaltbild, in dem ein Proxy-Server die geeignete Verbindung auswählt, und
- Fig. 2: eine Prinzipskizze des Proxy-Servers aus Figur 1.

Für die besonderen Anforderungen an eine Datenverbindung bei der Bereitstellung von Internetdiensten kann die Datenverbindung über zwei Zugänge erfolgen. Der erste Zugang über einen herkömmlichen Standard-ISP 1 (Standard-Internet-Service-Provider) bietet einen herkömmlichen POP-Einwahlpunkt (point of presence-Einwahlpunkt) an. Hier erfolgt eine Einwahl beispielsweise über eine analoge Telefonverbindung oder über eine Wahlverbindung wie beispielsweise mit ISDN, GSM, ATM oder ADSL. Der Anbieter des Standard-ISP 1 hat in der Regel für das Bereitstellen seiner Dienste mit dem Benutzer Verträge abgeschlossen.

Ein zweiter Zugang zum Internet wird über eine oder mehrere gebührenpflichtige Premium-Rate-Rufnummern 5 angeboten. Die Premium-Rate-Rufnummern 5 stellen Rufnummern einer Telefongesellschaft dar, bei denen besondere Gebühren erhoben werden. Üblicherweise teilt sich die erhobene Gebühr in eine Verbindungsgebühr und eine Anbietergebühr auf, wobei derjenige, der seine Dienste über die Premium-Rate-Rufnummer anbietet, mindestens teilweise die Anbietergebühr von der Telefongesellschaft ausgezahlt erhält. Diese rechnet die gesamten Gebühren über ihre herkömmliche Gebührenerfassung mit dem Kunden ab.

Ist der Benutzer mit dem world wide web über seinen Standard-ISP 1 verbunden, so werden ihm über seinen Internet-Browser eine Vielzahl von Adressen beispielsweise in Form von graphisch ausgestalteten Elementen angeboten. Um eine Datenverbindung mit einer der angebotenen Adressen herzustellen, aktiviert der Benutzer mit seinem Internet-Browser ein solches Element. Mit der Aktivierung des Elements wird eine physikalische Verbindung zu dem durch die Adresse bezeichneten Datenelement hergestellt. Der Verbindungsaufbau wird hierbei durch den PC 2 des Benutzers, der die Adresse aktiviert hat, angestoßen und über den POP-Einwahlpunkt in das Internet weitergeleitet.

Für die Herstellung der besonderen Datenverbindung, über die gebührenpflichtige Datenelemente bereitgestellt werden, wählt in diesem Ausführungsbeispiel die Verbindungseinrichtung 3 auf dem PC 2 den Premium-Rate-Zugang an. Hierbei wird eine bereits bestehende Verbindung zu dem Standard-ISP 1 selbständig - eventuell nach Rückfrage - abgebaut und eine Verbindung zu dem Premium-Rate-ISP 4 durch Anwahl einer gebührenpflichtigen Rufnummer 5 aufgebaut. Für eine solche gebührenpflichtige Verbindung kann eine Abschalteinrichtung vorgesehen werden, die beispielsweise in Form einer Time-Out-Einrichtung nach Verstreichen einer vorbestimmten Zeitspanne, in der keine Datenübertragung über die Verbindung stattgefunden hat, die Verbindung wieder trennt, um das Anfallen unnötiger Gebühren über diese Verbindung zu vermeiden.

Die Entscheidung, welcher ISP für die angefragte Adresse zuständig ist, hängt direkt von der bei der Verbindungseinheit 2 eingehenden URL-Zieladresse ab. Sobald die Zeichenkette, welche die URL-Zieladresse enthält, bestimmte Zeichen aufweist, die der Verbindungseinrichtung mitteilen, daß es sich um eine gebührenpflichtige Datenverbindung handelt, wird der Aufbau der Verbindung ausgelöst und die gebührenpflichtige Verbindung - eventuell nach Rückfrage - aufgebaut.

Wird durch den Benutzer eine Adresse aufgerufen, die das Merkmal "gebührenpflichtig" trägt, und ist keine Verbindungseinheit, die eine Verbindung zu dem Premium-Rate-ISP 4 herstellen kann, auf dem PC des Benutzers vorhanden, so erhält der Benutzer über seinen Standard-ISP 1 ein HTML-Dokument mit der Möglichkeit das erfindungsgemäße Verbindungsverfahren in Form eines Programms zu laden und zu installieren. Sobald die Installation abgeschlossen ist, wird die angefragte Adresse umgesetzt und die gebührenpflichtige Verbindung 6 aufgebaut.

Das Verfahren in Form eines Programms beinhaltet Systemvariablen, die bei der Installation gesetzt werden. Mit diesen Variablen kann festgestellt werden, von welchem Mutterprogramm die Kopie stammt.

Das Verfahren liest auf dem PC 2 des Benutzers die Nachrichten im http-Protokoll, um den Wechsel vom Standard-ISP 1 zum Premium-Rate-ISP 4 und umgekehrt auszulösen. Andere Protokolle, wie beispielsweise Real-Audio, FTP und dergleichen, werden auf der jeweils zu einem ISP bestehenden TCP/IP-Datenverbindung umgesetzt. Eine Übertragung von Datenelementen mit diesen Protokollen setzt damit voraus, daß zuvor die Verbindung zu dem richtigen ISP bereitgestellt wird.

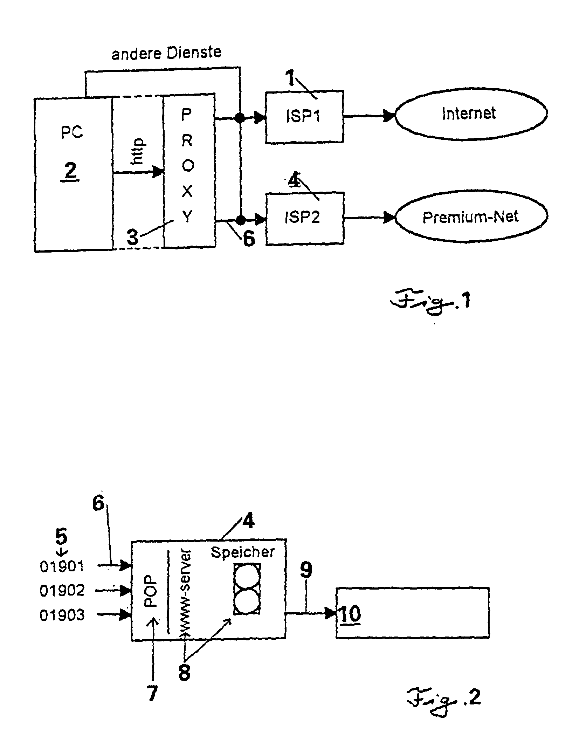

Wie in Figur 2 dargestellt, erfolgt der Zugang zu dem Premium-Rate-ISP 4 über einen herkömmlichen POP-Einwahlpunkt 7, der jedoch nur über die Einwahl mit einer Premium-Rate-Rufnummer 5 erreicht werden kann. Dies macht den Aufbau einfach, billig und gestattet es, auf bewährte Techniken zurückzugreifen. Der Zugang dient gleichzeitig, wie in Figur 2 dargestellt, als ein lokaler Web-Server 8, der die gebührenpflichtigen Dokumente vorhält. Sind diese ausschließlich gebührenpflichtig, so existieren keine Kopien der Dokumente im frei zugänglichen Internet. Für besondere Datenverbindungen mit Datenelementen, die nicht auf dem Web-Server 8 vorgehalten werden, wie beispielsweise Real-Audio oder komplexe Datenbankabfragen, bietet der Premium-Rate-POP-Einwahlpunkt 7 eine entsprechende TCP/IP-Verbindung 9 zu einem externen System 10 an. Der Anbieter des externen Systems kann für eine Anfrage über die TCP/IP-Verbindung 9 ein spezielles Sicherheitsprotokoll vereinbaren, durch das gewährleistet wird, daß eine Anfrage auch von dem Premium-Rate-POP-Einwahlpunkt 7 erfolgt und seine Gebühren abgerechnet werden. Alternativ könnte die Verbindung 9 auch über eine direkte physikalische Verbindung erfolgen, so daß keine weiteren Vorkehrungen zu treffen sind. Durch das Bereitstellen der Datenelemente auf dem lokalen Web-Server 8 kann die Bandbreite der Datenverbindung 6 direkt voll ausgenutzt werden.

Da der Zugang zum Premium-Rate-POP-Einwahlpunkt 7 für alle Diensteanbieter über dieselbe Premium-Rate-Rufnummer 5 erfolgt, ist es notwendig, die von der Telefongesellschaft ausgezahlte Anbietergebühr unter den Informationsanbietern aufzuteilen. Hierzu werden drei Verbindungszustände erfaßt:
1. Leitung ist abgebaut,
2. Leitung ist aufgebaut und
3. Datenelement ist bei aufgebauter Verbindung angefragt worden.

Eine Abrechnung kann nun so erfolgen, daß für alle Zeitspannen, zwischen zwei aufeinanderfolgenden Anfragen nach Datenelementen (Verbindungszustände 3) und zwischen Verbindungszuständen 3 und 1, Gebühren ausgezahlt werden. Diese Zeitspannen werden jeweils dem Anbieter des nachgefragten Datenelements zugerechnet und bei der Abrechnung zugrunde gelegt.

Gesondert muß bei der Abrechnung berücksichtigt werden, daß über eine bestehende Leitung eventuell auch mehrere Dienste zugleich genutzt werden können. Hierbei wird auf die bekannte Technik der Adressierung über Ports zurückgegriffen. Die Zurechnung der Anbietergebühr erfolgt auf einzelne Ports bezogen und anteilig für die einzelnen Anbieter.

Die Abhängigkeit der Adresse von der angefragten Adresse sei nachfolgend beispielhaft erläutert. Prinzipiell ist es bei der Generierung der zweiten Adresse möglich, daß diese identisch mit der angefragten Adresse ist. Für die Bestimmung der Abhängigkeit zwischen den URL-Adressen wird von der bestehenden Möglichkeit, mit einer URL-Adresse Parameter zu übertragen, Gebrauch gemacht. Bietet beispielsweise ein Datenbankbetreiber ABC den Zugang zu seinen Datenbanken auf einer Web-Seite mit dem Domainnamen "Angebote.de" an, so kann die entsprechende URL-Adresse wie folgt aussehen:
http://www.Angebote.de/ABC

Wird die URL-Adresse durch den Benutzer angefragt, so wird eine Datenverbindung zu dem Datenelement mit dieser URL-Adresse hergestellt.

Will der Datenbankanbieter nun einen Zugang zu seiner Datenbank von besonderer Qualität schaffen, so sieht in dem Ausführungsbeispiel die mit dem erfindungsgemäßen Verfahren zusammenwirkende URL-Adresse wie folgt aus:
http://www.Angebote.de/ABC?dokument.html,tarif=0.50

Wird diese Adresse angefragt, d.h. der Benutzer aktiviert beispielsweise diese Adresse durch Anklicken des entsprechenden Adressenelements, so wird durch das erfindungsgemäße Verfahren die nachfolgende zweite Adresse generiert:
http://www.ABC.de/www.Angebote.de/0.50/dokument.html

Für diese Adresse wird zunächst eine Premium-Rate-Telefonverbindung, beispielsweise in Deutschland eine 0190# Telefonnummer, zu dem Premium-Rate-ISP 4 aufgebaut. Die Verbindung erfolgt direkt zu dem Rechner mit der URL-Adresse:
www.ABC.de

Auf diesem Rechner wird nun das Datenelement:
www.Angebote.de/0.50/dokument.html
angefragt. Während der Anfrage und der Übertragung dieses Datenelements fallen die Anbietergebühren für die gewählte Rufnummer 5 an. Zugleich weiß der Anbieter der Datenbank, wenn das Datenelement "www.Angebote.de/0.50/dokument.html" angefragt wird, daß hierfür sein Tarif, hier als 0.5 gekennzeichnet, bezahlt wird. Es ist hilfreich, wenn interne Zugriffsrechte für einzelne Datenelemente abhängig von der zur Einwahl verwendeten Telefonverbindung vergeben werden. Ferner weiß er, daß die Verbindung ursprünglich zu dem Rechner "www.Angebote.de" bestand. Gleichzeitig kann der Anbieter der Datenbank unter der ursprünglichen Adresse eine etwas langsamere oder kostenfreie Demoversion des Datenbankzugangs hinterlegen. Ist das Datenelement übertragen, so kann die Verbindung 6 wieder abgebaut und die ursprüngliche Verbindung wieder aufgebaut werden. Die Syntax der Parameter ist hierbei so gewählt, daß die Benennung der Datenelemente durch ein einfaches Programm ausführbar ist.

In einer alternativen Ausführungsform ist es möglich, die Gebührenerfassung nicht über eine Telefonnummer mit Anbietergebühren pro Zeit zu ermitteln, sondern über eine Telefonnummer, bei deren Anwahl individuell bestimmbare Gebühren erhoben werden. Bei dieser Gebührenerfassung würden dann einem eventuell von der Telefongesellschaft verschiedenen Premium-Rate-ISP 4 die Abrechnungsdaten des Benutzers der Telefonnummer mitgeteilt. Der Premium-Rate-ISP 4 ordnet diese seinen Verbindungsdaten zu, so daß dann individuelle Gebühren entweder durch die Telefongesellschaft oder den Premium-Rate-ISP 4 erhoben werden können. Ein Austausch der Abrechnungsdaten kann hierbei mit gewöhnlicher Post erfolgen, so daß keinerlei Sicherheitsprobleme bestehen. Selbstverständlich können mit dieser Gebührenerhebung auch Gebühren zusätzlich zu den bereits pro Zeit erhobenen Gebühren abgerechnet werden.

Als zweckmäßig erweist es sich, insbesondere wenn eine Vielzahl von Anbietern mit besonderen Leistungsmerkmalen in dem Premium-Netz vorhanden ist, Leistungsparameter über die erste hergestellte Verbindung, hier also die Tarifinformation, bereitzustellen. Diese Leistungsparameter werden dann bei allen serverseitigen Anfragen in das Premium-Netz mitgesendet, so daß bei einem Wechsel innerhalb des Premium-Netzes die Information über die Einwahl und somit über die verfügbaren Leistungsparameter nicht verloren geht. In der Umsetzung bestehen die Möglichkeiten entweder mit jedem IP-Paket die verfügbaren Leistungsparameter zu codieren oder bei Anfragen des Servers diese Information zu übertragen. Letztere Technik kann auch als Cookie-Technik ausgeführt werden, wobei in dem Ausführungsbeispiel die Cookies lediglich innerhalb des Premium-Netzes Verwendung finden. Durch die Hinzunahme dieser Möglichkeit kann der Benutzer in besonders einfacher Weise innerhalb des Premium-Netzes Verbindungen zu unterschiedlichen Rechnern herstellen, ohne jeweils eine neue Telefonverbindung zum Premium-Netz aufzubauen. Mit anderen Worten, indem die Information über die zuerst aufgebaute Verbindung für weitere Verbindungen bereitgestellt wird, ist ein Wechsel innerhalb des Premium-Netzes zwischen unterschiedlichen Datenverarbeitungsanlagen mit einer einmal aufgebauten Verbindung möglich. Dabei stehen verfügbare gewünschte besondere Leistungsmerkmale, die sich z. B. in der Bandbreite der Verbindung ausdrücken, auf Wunsch einem Anbieter exclusiv zur Verfügung. Für den Anbieter wird auf Wunsch sichergestellt, daß ein Benutzer zeitgleich das Angebot nur eines Anbieters mit uneingeschränkten Leistungsmerkmalen nutzen kann. Auf diese Weise ist gewährleistet, daß einerseits der Anbieter den Kanal nicht mit einem anderen Anbieter zu teilen braucht und andererseits dem Benutzer beispielsweise die gesamte Bandbreite der Verbindung zur Verfügung steht. Letzteres kann bei einer Musikübertragung von Bedeutung sein.

Ebenfalls kann in dem Ausführungsbeispiel ein Verfahrensschritt vorgesehen werden, um auftretende Verzögerungen beim Herstellen einer neuen Verbindung für den durch den Benutzer verwendeten Browser zu überbrücken. Mit diesem Überbrückungsschritt kann beispielsweise erreicht werden, daß durch der Browser wartet, bis die neue Verbindung aufgebaut wurde und zwischenzeitlich keine Fehlermeldung generiert. Erreicht werden kann diese Verzögerung, indem beispielsweise nachdem Verfahrensschritt der Generierung der zweiten Adresse zunächst eine Zwischenseite dem Benutzer angeboten wird. Diese Zwischenseite kann beispielsweise dem Benutzer noch einmal zur Bestätigung eines besonderen Leistungsmerkmals auffordern. Vorteilhaft ist hierbei auch, daß eine solche Zwischenseite auch in lokalen Netzwerken ohne großen Aufwand jedem Benutzer über seinen Browser angeboten werden kann.

### Bezugszeichenliste

- 1.: Standard-ISP
- 2.: PC
- 3.: Verbindungseinrichtung
- 4.: Premium-Rate-ISP
- 5.: besondere Rufnummer
- 6.: besondere Telefonverbindung
- 7.: POP-Einwahlpunkt
- 8.: Web-Server
- 9.: TCP/IP-Verbindung
- 10.: externes System

## Patentansprüche

1. Verbindungseinheit (3) zur Herstellung einer Datenverbindung zwischen zwei Datenverarbeitungsanlagen, die derart ausgebildet ist, dass sie abhängig von einer Anfrage einer ersten Datenverarbeitungsanlage (2) die Verbindung mit einer zweiten Datenverarbeitungsanlage (8) zur Übermittlung eines auf dieser abgelegten Datenelements aufbaut, wobei die zweite Datenverarbeitungsanlage (8) und deren angefragtes Datenelement von der ersten Datenverarbeitungsanlage (2) durch eine Adresse bezeichnet sind, **dadurch gekennzeichnet, dass** ein Adressengenerator vorgesehen ist, der abhängig von der angefragten Adresse eine zweite Adresse generiert und einen Aufbau der Datenverbindung zu der durch die zweite Adresse bezeichneten Datenverarbeitungsanlage und deren Datenelement auslöst und dass wenigstens der Adressengenerator Bestandteil der ersten Datenverarbeitungsanlage (2) ist.

2. Verbindungseinheit (3) nach Anspruch 1, **dadurch gekennzeichnet, dass** mindestens ein Abschnitt der Datenverbindung aus einer Telefonverbindung (6) in einem Telefonnetz besteht.

3. Verbindungseinheit (3) nach einem der Ansprüche 1 oder 2, **dadurch gekennzeichnet, dass** der Adressengenerator derart ausgebildet ist, dass er den Aufbau der Datenverbindung für die zweite Adresse über eine vorbestimmte Telefonverbindung (6), die mindestens in einem Leistungsmerkmal von einer herkömmlichen Verbindung abweicht, auslöst.

4. Verbindungseinheit (3) nach Anspruch 3, **dadurch gekennzeichnet, dass** die aufgebaute Datenverbindung eine gesamte zur Verfügung stehende Bandbreite der vorbestimmten Telefonverbindung (6) ausnutzt.

5. Verbindungseinheit nach Anspruch 3 oder 4,**dadurch gekennzeichnet, dass** für den Aufbau der vorbestimmten Telefonverbindung (6) der Adressengenerator derart ausgebildet ist, dass er eine bestehende Telefonverbindung trennt.

6. Verbindungseinheit (3) nach Anspruch 5, **dadurch gekennzeichnet, dass** der Adressengenerator derart ausgebildet ist, dass er den Aufbau der getrennten Verbindung wieder auslöst, wenn für die angefragte Adresse kein besonderes Leistungsmerkmal erforderlich ist.

7. Verbindungseinheit (3) nach einem der Ansprüche 1 bis 6, **dadurch gekennzeichnet, dass** die zweite Adresse eine Datenverarbeitungsanlage bezeichnet, die von der durch die angefragte Adresse bezeichneten Datenverarbeitungsanlage verschieden ist.

8. Verbindungseinheit (3) nach einem der Ansprüche 1 bis 7, **dadurch gekennzeichnet, dass** die von dem Adressengenerator erzeugte zweite Adresse eine Datenverarbeitungsanlage mit einem Datenelement in einem Unternetzwerk (4) bezeichnet.

9. Verbindungseinheit (3)nach einem der Ansprüche 1 bis 8, **dadurch gekennzeichnet, dass** der Adressengenerator eine Liste enthält, die jeder zweiten Adresse mindestens eine Adresse zuordnet, bei deren Anfrage die zweite Adresse generiert wird.

10. Verbindungseinheit (3) nach einem der Ansprüche 1 bis 9, **dadurch gekennzeichnet, dass** die beim Adressengenerator angefragte Adresse Informationen enthält, welche das Generieren der zweiten Adresse auslösen und die zweite Adresse bestimmen.

11. Verbindungseinheit (3) nach Anspruch 10, **dadurch gekennzeichnet, dass** die beim Adressengenerator angefragte Adresse Informationen über die besonderen Leistungsmerkmale der angefragten Datenverbindung enthält.

12. Verfahren zur Herstellung einer Datenverbindung zwischen zwei Datenverarbeitungsanlagen, das auf eine Anfrage einer ersten Datenverarbeitungsanlage (2) hin Übermittlung eines auf der zweiten Datenverarbeitungsanlage (8) abgelegten Datenelements einen Aufbau der Datenverbindung auslöst, wobei die zweite Datenverarbeitungsanlage (8) und deren angefragtes Datenelement durch eine Adresse bezeichnet werden, **dadurch gekennzeichnet, dass** abhängig von der angefragten Adresse eine zweite Adresse generiert wird und der Aufbau der Datenverbindung zu der durch die zweite Adresse bezeichneten Datenverarbeitungsanlage (8) und deren Datenelement ausgelöst wird und dass die zweite Adresse von der anfragenden Datenverarbeitungsanlage (2) generiert wird.

13. Verfahren nach Anspruch 12, **dadurch gekennzeichnet, dass** der Aufbau der Datenverbindung zu der durch die zweite Adresse bezeichneten Datenverarbeitungsanlage (8) mindestens teilweise über eine vorbestimmte Telefonverbindung (6) erfolgt.

14. Verfahren nach Anspruch 13, **dadurch gekennzeichnet, dass** die angefragte Adresse, für die eine zweite Adresse generiert wird, eine bestehende Telefonverbindung, die mit der vorbestimmten Telefonverbindung (6) nicht übereinstimmt, abgebaut wird und anschließend die vorbestimmte Telefonverbindung (6) durch Anwahl einer entsprechenden Telefonnummer (5) von der ersten Datenverarbeitungsanlage (2) aus aufgebaut wird.

15. Verfahren zur Herstellung einer Datenverbindung nach einem der Ansprüche 13 oder 14, **dadurch gekennzeichnet, dass** die vorbestimmte Telefonverbindung (6) mindestens ein besonderes Leistungsmerkmal aufweist.

16. Verfahren nach Anspruch 15, **dadurch gekennzeichnet, dass** durch Informationen der angefragten Adresse mindestens ein Leistungsmerkmal für die Datenverbindung bestimmt wird und die vorbestimmte Telefonverbindung (6) abhängig von den Informationen mit entsprechenden Leistungsmerkmalen ausgewählt wird.

17. Verfahren zur Herstellung einer Datenverbindung nach einem der Ansprüche 13 bis 16, **dadurch gekennzeichnet, dass** zu der vorbestimmten Telefonverbindung mit besonderen Leistungsmerkmalen abhängig von der angefragten Adresse gewechselt wird.

18. Verfahren zur Herstellung einer Datenverbindung nach einem der Ansprüche 12 bis 17, **dadurch gekennzeichnet, dass** die durch die zweite Adresse bezeichnete Datenverarbeitungsanlage von der durch die angefragte Adresse bezeichneten Datenverarbeitungsanlage verschieden ist.

19. Verfahren zur Herstellung einer Datenverbindung nach einem der Ansprüche 12 bis 19, **dadurch gekennzeichnet, dass** die zu generierende zweite Adresse durch Parameter der angefragten Adresse bezeichnet wird.

20. Verfahren zur Herstellung einer Datenverbindung nach einem der Ansprüche 12 bis 19, **dadurch gekennzeichnet, dass** auf der anfragenden Datenverarbeitungsanlage (2) einstellbar ist, ob für die angefragte Adresse die zweite Adresse generiert werden soll.

21. Verfahren zur Herstellung einer Datenverbindung nach einem der Ansprüche 12 bis 20, **dadurch gekennzeichnet, dass** die angefragte Adresse und die zweite Adresse jeweils in einer einem verwendeten Protokoll entsprechenden Weise eine Datenverarbeitungsanlage bezeichnen.

22. Verfahren zur Herstellung einer Datenverbindung nach einem der Ansprüche 12 bis 21, **dadurch gekennzeichnet, dass** die angefragte und die zweite Adressen dem http-Protokoll und/oder einem Protokoll einer Anwendungsschicht genügen.

23. Verfahren zur Herstellung einer Datenverbindung nach einem der Ansprüche 15 bis 22, **dadurch gekennzeichnet, dass** die Telefonverbindung mit dem besonderen Leistungsmerkmal abgebaut wird, wenn die zweite Adresse kein besonderes Leistungsmerkmal erfordert.

24. Verfahren zur Herstellung einer Datenverbindung nach Anspruch 23, **dadurch gekennzeichnet, dass** nach dem Abbauen der Telefonverbindung mit dem besonderen Leistungsmerkmal eine vorher bestandene Telefonverbindung wieder aufgebaut wird.

25. Verfahren zur Herstellung einer Datenverbindung nach Anspruch 15 bis 24, **dadurch gekennzeichnet, dass** in einem vorbestimmten, Zeitintervall mehrere angefragte Adressen gesammelt werden und für die von den angefragten Adressen, die Verbindungen mit besonderen Leistungsmerkmalen erfordern, gemeinsam entsprechende Datenverbindungen mit besonderen Leistungsmerkmalen aufgebaut werden.

26. Verfahren nach einem der Ansprüche 12 bis 25, **dadurch gekennzeichnet, dass** bei einem Aufbau einer Verbindung zu einer weiteren Datenverarbeitungsanlage jeweils Parameter über die aufgebaute Datenverbindung zu der durch die zweite Adresse bezeichneten Datenverarbeitungsanlage (8) und deren Datenelement bereitgestellt werden.

27. Verfahren nach einem der Ansprüche 12 bis 26, **dadurch gekennzeichnet, dass** vor dem Auslösen des Aufbaus einer Datenverbindung zu der durch die zweite Adresse bezeichneten Datenverarbeitungsanlage (8) und deren Datenelement eine Zwischenseite aufgerufen wird.

## Claims

1. A connecting unit (3) for making a data connection between first and second data processing installations, the connecting unit being operable in dependence on an inquiry from the first data processing installation (2) to establish the connection to the second data processing installation (8) for transmission of a data item thereat, wherein the second data processing installation (8) and the requested data item thereof are identified by the first data processing installation (2) by an inquiry address, comprising an address generator operable in dependence on the inquiry address to generate a second address and initiate establishment of the data connection to the data processing installation identified by the second address and the data item thereof and wherein at least the address generator is a component of the first data processing installation (2).

2. A connecting unit (3) as set forth in claim 1, wherein at least a portion of the data connection comprises a telephone connection (6) in a telephone system.

3. A connecting unit (3) as set forth in claim 1 or 2, wherein the address generator is operable to initiate the establishment of the data connection for the second address by way of a predetermined telephone connection (6) which differs from a conventional connection at least in one performance feature.

4. A connecting unit (3) as set forth in claim 3, wherein the established data connection utilises the entire available band width of the predetermined telephone connection (6).

5. A connecting unit (3) as set forth in claim 3 or 4, wherein the address generator is operable to disconnect an existing telephone connection to set up the predetermined telephone connection (6).

6. A connecting unit (3) as set forth in claim 5, wherein the address generator is operable to initiate the establishment of the separated connection again when no special performance feature is required for the requested address.

7. A connecting unit (3) as set forth in claims 1 to 6, wherein the second address identifies a data processing installation which is different from the data processing installation identified by the inquiry address.

8. A connecting unit (3) as set forth in claims 1 to 7, wherein the second address produced by the address generator identifies a data processing installation with a data item in a sub-network (4).

9. A connecting unit (3) as set forth in claims 1 to 8, wherein the address generator contains a list which allocates to each second address at least one address, upon the inquiry for which the second address is generated.

10. A connecting unit (3) as set forth in claims 1 to 9, wherein the inquiry address at the address generator contains items of information to initiate generation of the second address and determine the second address.

11. A connecting unit (3) as set forth in claim 10, wherein the inquiry address at the address generator contains items of information about particular performance features of the requested data connection.

12. A method of making a data connection between first and second data processing installations, which in response to an inquiry from a first data processing installation (2) initiates establishment of the data connection for transmission of a data item at the second data processing installation (8), wherein the second data processing installation (8) and the requested data item thereof are identified by an address, wherein in dependence on the inquiry address a second address is generated and establishment of the data connection to the data processing installation (8) identified by the second address and said data item is initiated and wherein the second address is generated by the inquiring data processing installation (2).

13. A method as set forth in claim 12, wherein establishment of the data connection to the data processing installation (8) identified by the second address is at least partially implemented by way of a predetermined telephone connection (6).

14. A method as set forth in claim 13, wherein in the case of an inquiry address for which a second address is generated, an existing telephone connection which is not identical to the predetermined telephone connection (6) is interrupted and then the predetermined telephone connection (6) is set up by dialling of a suitable telephone number (5) by the first data processing installation (2).

15. A method of making a data connection as set forth in claims 13 or 14, wherein the predetermined telephone connection (6) has at least one special performance feature.

16. A method as set forth in claim 15, wherein at least one performance feature for the data connection is determined by items of information of the inquiry address and the predetermined telephone connection (6) is selected in dependence on the items of information with corresponding performance features.

17. A method as set forth in claims 13 to 16 comprising changing to the predetermined telephone connection with special performance features in dependence on the inquiry address.

18. A method as set forth in claims 12 to 17, wherein the data processing installation identified by the second address is different from the data processing installation identified by the inquiry address.

19. A method as set forth in claims 12 to 18, wherein the second address to be generated is identified by parameters of the inquiry address.

20. A method as set forth in claims 12 to 19, including the optional step of setting at the inquiring data processing installation (2) whether a second address is to be generated for an inquiry address.

21. A method as set forth in claims 12 to 20, wherein the inquiry address and the second address respectively identify a data processing installation in a manner corresponding to the respective protocol used.

22. A method as set forth in claims 12 to 21, wherein the incoming and the second addresses comply with the http-protocol and/or with a protocol of an application layer.

23. A method as set forth in claims 15 to 22, wherein the telephone connection having the special performance feature is interrupted when the second address does not require a special performance feature.

24. A method as set forth in claim 23, wherein after interruption of the telephone connection with the special performance feature a previously existing telephone connection is restored.

25. A method as set forth in claims 15 to 24, wherein in a predetermined period of time a plurality of inquiry addresses are collected and for those of the inquiry addresses which require connections with special performance features jointly corresponding data connections with special performance features are set up.

26. A method as set forth in claims 12 to 25, wherein when a connection to a further data processing installation is set up respective parameters are prepared about the set-up data connection to the data processing installation (8) identified by the second address and said data item.

27. A method as set forth in claims 12 to 26, wherein prior to initiation of the establishment of a data connection to the data processing installation (8) identified by the second address and said data item thereof an intermediate page is called up.

## Revendications

1. Unité de connexion (3) en vue de l'établissement d'une liaison de données entre deux installations de traitement de données, qui est constituée de telle sorte qu'elle établit en fonction d'une demande d'une première installation de traitement de données (2) la liaison avec une seconde installation de traitement de données (8) en vue de la transmission d'un élément de données disposé sur celle-ci, la seconde installation de traitement de données (8) et l'élément de données demandé de celle-ci par la première installation de traitement de données (2) sont désignés par une adresse, **caractérisée en ce qu'**un générateur d'adresses est prévu, qui génère en fonction de l'adresse demandée une seconde adressé et déclenche l'établissement de la liaison de données avec l'installation de traitement de données désignée par la seconde adresse et l'élément de données de celle-ci et **en ce qu'**au moins le générateur d'adresses est un constituant de la première installation de traitement de données (2).

2. Unité de connexion (3) selon la revendication 1, **caractérisée en ce qu'**au moins une partie de la liaison de données se compose d'une liaison téléphonique (6) dans un réseau téléphonique.

3. Unité de connexion (3) selon une des revendications 1 ou 2, **caractérisée en ce que** le générateur d'adresses est réalisé de telle sorte qu'il déclenche l'établissement de la liaison de données pour la seconde adresse par l'intermédiaire d'une liaison téléphonique prédéterminée (6), qui s'écarte au moins en une caractéristique de puissance d'une liaison classique.

4. Unité de connexion (3) selon la revendication 3, **caractérisée en ce que** la liaison de données établie utilise une largeur de bande disponible totale de la liaison téléphonique prédéterminée (6).

5. Unité de connexion selon la revendication 3 ou 4, **caractérisée en ce que** pour l'établissement de la liaison téléphonique prédéterminée (6), le générateur d'adresses est réalisé de telle sorte qu'il coupe une liaison téléphonique existante.

6. Unité de connexion (3) selon la revendication 5, **caractérisée en ce que** le générateur d'adresses est réalisé de telle sorte qu'il déclenche à nouveau l'établissement de la liaison coupée, lorsque pour l'adresse demandée aucune caractéristique de puissance particulière n'est nécessaire.

7. Unité de connexion (3) selon une des revendications 1 à 6, **caractérisée en ce que** la seconde adresse désigne une installation de traitement de données, qui est différente de l'installation de traitement de données désignée par l'adresse demandée.

8. Unité de connexion (3) selon une des revendications 1 à 7, **caractérisée en ce que** la seconde adresse générée par le générateur d'adresses désigne une installation de traitement de données avec un élément de données dans un sous-réseau (4).

9. Unité de connexion selon une des revendications 1 à 8, **caractérisée en ce que** le générateur d'adresses contient une liste, qui associe à chaque seconde adresse au moins une adresse, lors de la demande de laquelle est générée la seconde adresse.

10. Unité de connexion (3) selon une des revendications 1 à 9, **caractérisée en ce que** l'adresse demandée par le générateur d'adresses contient des informations, qui déclenchent la génération de la seconde adresse et déterminent la seconde adresse.

11. Unité de connexion (3) selon la revendication 10, **caractérisée en ce que** l'adresse demandée par le générateur d'adresses contient des informations concernant les caractéristiques particulières de puissance de la liaison de données demandée.

12. Procédé d'établissement d'une liaison de données entre deux installations de traitement de données, qui déclenche sur demande d'une première installation de traitement de données (2), pour la transmission d'un élément de données, placé sur la seconde installation de traitement de données (8), un établissement de la liaison de données, la seconde installation de traitement de données (8) et l'élément de données demandé de celle-ci étant désignés par une adresse, **caractérisé en ce qu'**une fonction de l'adresse demandée, une seconde adresse est générée et l'établissement de la liaison de données avec l'installation de traitement de données (8) et l'élément de données de celle-ci est déclenché et **en ce que** la seconde adresse est générée par l'installation de traitement de données (2) effectuant la demande.

13. Procédé selon la revendication 12, **caractérisé en ce que** l'établissement de la liaison de données avec l'installation de traitement de données (8) désignée par la seconde adresse s'effectue au moins partiellement par l'intermédiaire d'une liaison téléphonique prédéterminée (6).

14. Procédé selon la revendication 13, **caractérisé en ce que** l'adresse demandée, pour laquelle une seconde adresse est générée, une liaison téléphonique existante, qui ne correspond pas à la liaison téléphonique prédéterminée (6), est coupée et ensuite la liaison téléphonique prédéterminée (6) est établie par sélection d'un numéro téléphonique correspondant (5) par la première installation de traitement de données (2).

15. Procédé d'établissement d'une liaison de données selon une des revendications 13 ou 14, **caractérisé en ce que** la liaison téléphonique prédéterminée (6) présente au moins une caractéristique de puissance particulière.

16. Procédé selon la revendication 15, **caractérisé en ce que** par des informations de l'adresse demandée au moins une caractéristique de puissance pour la liaison de données est déterminée et la liaison téléphonique prédéterminée (6) est sélectionnée en fonction des informations avec des caractéristiques de puissance correspondantes.

17. Procédé d'établissement d'une liaison de données selon une des revendications 13 à 16, **caractérisé en ce que** la liaison téléphonique prédéterminée avec des caractéristiques de puissance particulières est changée en fonction de l'adresse demandée.

18. Procédé d'établissement d'une liaison de données selon une des revendications 12 à 17, **caractérisé en ce que** l'installation de traitement de données désignée par la seconde adresse est différente de l'installation de traitement de données désignée par l'adresse demandée.

19. Procédé d'établissement d'une liaison de données selon une des revendications 12 à 19, **caractérisé en ce que** la seconde adresse à générer est désignée par des paramètres de l'adresse demandée.

20. Procédé d'établissement d'une liaison de données selon une des revendications 12 à 19, **caractérisé en ce que** sur l'installation de traitement de données (2) effectuant la demande, est réglable si, pour l'adresse demandée, la seconde adresse doit être générée.

21. Procédé d'établissement d'une liaison de données selon une des revendications 12 à 20, **caractérisé en ce que** l'adresse demandée et la seconde adresse désignent, d'une manière correspondant à un protocole utilisé, une installation de traitement de données.

22. Procédé d'établissement d'une liaison de données selon une des revendications 12 à 21, **caractérisé en ce que** l'adresse demandée et la seconde adresse suffisent au protocole http et/ou à un protocole d'une couche d'application.

23. Procédé d'établissement d'une liaison de données selon une des revendications 15 à 22, **caractérisé en ce que** la liaison téléphonique avec la caractéristique de puissance particulière est supprimée, lorsque la seconde adresse n'exige aucune caractéristique de puissance particulière.

24. Procédé d'établissement d'une liaison de données selon la revendication 23, **caractérisé en ce qu'**après la suppression de la liaison téléphonique avec la caractéristique de puissance particulière, une liaison téléphonique précédemment existante est rétablie.

25. Procédé d'établissement d'une liaison de données selon la revendication 15 à 24, **caractérisé en ce que** dans un intervalle de temps prédéterminé plusieurs adresses demandées sont réunies et pour celles des adresses demandées, qui exigent des liaisons avec des caractéristiques de puissance particulières, toutes les liaisons de données correspondantes avec des caractéristiques de puissance particulières sont établies.

26. Procédé selon une des revendications 12 à 25, **caractérisé en ce que**, lors de l'établissement d'une liaison . avec une autre installation de traitement de données, des paramètres sont préparés par l'intermédiaire de la liaison de données établie avec l'installation de traitement de données (8) désignée par la seconde adresse et l'élément de données de celle-ci.

27. Procédé selon une des revendications 12 à 26, **caractérisé en ce qu'**avant le déclenchement de l'établissement d'une liaison de données avec l'installation de traitement de données (8) désignée par la seconde adresse et l'élément de données de celle-ci, un poste intermédiaire est appelé.
